# EUROPEAN PATENT APPLICATION

(11) **EP 1 457 542 A2**
(43) Date of publication of application: **15.09.2004**
(21) Application number: 04005043.7
(22) Date of filing: 04.03.2004
(51) Int. Cl.: C09K 5/10, H01M 8/04

(54) **Fuel cell stack coolant composition**

(30) Priority: 13.03.2003 JP 2003067749
(71) Applicant: NISSAN MOTOR COMPANY, LIMITED, Yokohama-shi, Kanagawa 221-0023 (JP); Shishiai-Kabushikigaisha, Seki-shi, Gifu 501-3923 (JP)
(72) Inventor: Abe, Saburou, Ebina-shi Kanagawa 243-0431 (JP); Egawa, Hiroshi, Seki-shi Gifu 501-3923 (JP); Takemoto, Shinichiro, Yokohama-shi Kanagawa 244-0816 (JP); Ito, Naoshi, Seki-shi Gifu 501-3923 (JP)
(74) Representative: Torggler, Paul N.

(57) **Abstract**

The present invention is a fuel cell stack coolant composition, which maintains the electrical conductivity of coolant low and provides self identification by tint. The coolant composition provides those properties even when a cation or anion exchanger is provided where the coolant is used. The coolant composition includes a base material and a dye which maintains the electrical conductivity of coolant at 10 µ S/cm or lower at 25°C or a dye which can pass through a cation or anion exchanger.

## Description

### Background of the invention

### Field of the invention

The present invention relates to a coolant composition for cooling a fuel cell, in particular, an automobile fuel cell. More particularly, this invention relates to a fuel cell coolant composition which is tinted for prevention of accidental ingestion and provision of specific information or identification.

### Prior art

A fuel cell is generally composed of a stack of component cells. Since heat is generated from the stack when electric power is generated, a cooling plate is generally inserted into every few component cells in order to cool the stack. A coolant passage or passages are formed within each cooling plate to cool the plate with a coolant flowing through the passage or passages.

As the coolant circulates through the passages of the cooling plates, part of the electric current generated in the stack flows or leaks into the coolant when the electrical conductivity of the coolant is high, resulting in loss of electric power of the fuel cell.

For this reason, pure water having low electrical conductivity or good electrical insulating property has generally been used to cool fuel cell stacks.

Such pure water is hardly distinguishable in appearance from tap water having relatively high electrical conductivity. There is thus a possibility that tap water is used instead of pure water accidentally, causing aforesaid electrical loss. Accordingly, coolants are typically tinted such that accidental use of tap water may be effectively avoided.

The coolant in an intermittently working fuel cell such as an automobile fuel cell gets cool or cold when the surrounding temperature falls while the fuel cell is idle. When the fuel cell is idle at a temperature below the freezing point, pure water in the cooling plates of the fuel cell may get frozen and swell, potentially damaging the cooling plates. It is possible that the fuel cell where pure water is used as coolant totally goes out of order or even broken.

Glycol, alcohol or glycol ether may be blended as a base ingredient of coolant for their antifreeze properties.

Glycol, alcohol and glycol ether are almost transparent and toxic. There remains a possibility of accidental ingestion.

For this reason, glycol, alcohol and ether blended in coolant for internal combustion engines are typically tinted with a dye so as to prevent accidental ingestion.

Dyes which are added to coolant for internal combustion engines easily get ionized in the coolant and increase electrical conductivity of the coolant.

In addition, when a cation or anion exchanger is provided in association with cooling passages to remove ions which are generated when the base ingredient of the coolant such as ethylene glycol is deteriorated, the dye blended in the coolant for internal combustion engines is also removed by the cation or anion exchanger.

In view of the aforementioned shortcomings, the present inventors have carried out intensive studies and come up with the present invention.

Accordingly, it is an object of the present invention to provide a fuel cell stack coolant composition (hereinafter referred to as "coolant composition") which possesses low electrical conductivity and self identification capability.

It is another object of the present invention to provide a coolant composition which possesses low electrical conductivity and self identification capability as well as capability to pass through a cation or anion exchanger.

### Summary of the invention

The coolant composition of the present invention is characterized in that it is comprised of a base ingredient and a dye which is capable of maintaining the electrical conductivity of the coolant where the coolant composition is blended sufficiently low or which can pass through a cation or anion exchanger without deterioration.

The base ingredient should be low electrical conductive or both low electrical conductive and antifreezing (at 0°C or lower). Such a base ingredient may be selected from water, glycols, alcohols, glycol ethers and blends thereof.

Glycols which may be blended include ethylene glycol, diethylene glycol, triethylene glycol, propylene glycol, 1,3-propanediol, 1,3-butanediol, 1,5-pentanediol and hexylene glycol.

Alcohols which may be blended include methanol, ethanol, propanol, butanol, pentanol, hexanol, heptanol and octanol.

Glycol ethers which may be blended include ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether.

The dye which may be blended should be able to maintain the electrical conductivity of the coolant where the coolant composition ofthepresentinventionisblendedsufficientlylow (hereinafter referred to as "A-type dye") or can pass through a cation or anion exchanger without deterioration (hereinafter referred to as "B-type dye").

A-type dyes are dyes which canmaintain the electrical conductivity of the coolant where the coolant composition of the present invention is blended low enough not to degrade the electricity generating power of fuel cells, or can maintain the electrical conductivity equal to or lower than 10 µS/cm at 25°C. Such A-type dyes are dyes which are not ionized in the coolant (A-1 type) or dyes which may be ionized but are capable of maintaining the electrical conductivity of the coolant low enough not to adversely affect the power generation of the fuel cell by controlling the amount blended small enough (A-2 type).

A-1 type dyes include azoic dyes, sulfuric dyes, vats, oil-soluble dyes and disperse dyes, which do not have a sulfonic group or a carboxyl group.

Such azoic dyes include Azoic Blue 10 according to SDC (The Society of Dyers and Colorists in Association with American Association of Textile Chemists and Colorists) . Such sulfur dyes include Sulphur Blue 3, Sulphur Blue 6, Sulphur Blue 7, Sulphur Blue 9, Sulphur blue 13, Sulphur Green 1, Sulphur Red 2, Sulphur Red 3, Sulphur Red 5, and Sulphur Red 7, according to SDC. Such vats include Vat Blue 1, Vat Blue 3, Vat Blue 4, Vat Blue 5, Vat Blue 6, Vat Blue 12, Vat Blue 13, Vat Blue 14, Vat Blue 18, Vat Blue 19, Vat Blue 20, Vat Blue 35, Vat Blue 41, Vat Green 1 and Vat Red 1, according to SDC. Such oil-soluble dyes include Solv. Blue 36, Solv. Blue 63, Solv. Green 3, Solv. Red 23, Solv. Red 43, Solv. Red 48, Solv. Red 72, Solv. Orange 2, Solv. Yellow 33, and Solv. Yellow 73, according to SDC. Such disperse dyes include Disperse Blue 1, Disperse Blue 3, Disperse Blue 14, Disperse Orange 1, Disperse Orange 3, Disperse Orange 11, Disperse Orange 13, Disperse Orange 25, Disperse Red 1, Disperse Red 13, Disperse Red 19, Disperse Yellow 3 and Disperse Yellow 9, according to SDC.

The aforementionedA-1 type dyes are not ionized and have excellent heat resistance such that the hue of the coolant does not change or hardly changes even at 100°C. Therefore, the self identification capability of the coolant is maintained in the range 90 to 100°C. A-2 type dyes may be ionized but are still capable of maintaining the low electrical conductivity of the coolant if the amount blended is limited such that the power generated by the fuel cell may not be deteriorated. Such A-2 type dyes include Acid Blue 74 and Direct Green 8 which are excellent in heat resistance as A-1 dyes. Such a dye is blended in the coolant composition in the range 0.00001 to 0.1% by weight, preferably 0.00001 to 0.01% by weight. When a A-2 type dye is blended less than the foregoing range, the tint of the coolant is lost and the coolant identification will be lost together, and when blended more than the foregoing range, the low electrical conductivity can not be maintained.

It is desirable that such an A-1 type dye is contained in the cooling composition in the range 0.00001 to 0.1% by weight. Use of an A-1 type dye less than 0.00001% by weight will not give a sufficient tint, while use of more than 0.1% by weight is merely uneconomical.

The B type dyes are dyes which are not removed by a cation or anion exchanger, such as an ion-exchange resin, zeolite or acid clay, provided in cooling passages. Examples of such B type dyes include dyes which contain a polar group in the molecules and are capable of maintaining coolant sufficiently low electrical conductive so as to prevent degradation of power generation of fuel cells (B-1 type) , or dyes which include a basic group or an acidic group and do not degrade power generation of the fuel cell when the amount blended is small (B-2 type).

B-1 type dyes include dyes which contain a polar group in their chemical structures such as azoic dyes, sulfuric dyes, vats, oil-soluble dyes and disperse dyes, which do not have a sulfonic acid group or a carboxyl group.

Such azoic dyes include Azoic Blue 10 according to SDC. Such sulfuric dyes include Sulphur Blue 3, Sulphur Blue 6, Sulphur Blue 7, Sulphur Blue 9, Sulphur Blue 13, Sulphur Green 1, Sulphur Red 2, Sulphur Red 3, Sulphur Red 5 and Sulphur Red 7 according to SDC. Such vats include Vat Blue 1, Vat Blue 3, Vat Blue 4, Vat Blue 5, Vat Blue 6, Vat Blue 12, Vat Blue 13, Vat Blue 14, Vat Blue 18, Vat Blue 19, Vat Blue 20, Vat Blue 35, Vat Blue 41, Vat Green 1 and Vat Red 1 according to SDC. Such oil-soluble dyes include Solv. Blue 36, Solv. Blue 63, Solv. Green 3, Solv. Red 23, Solv. Red 43, Solv. Red 48, Solv. Red 72, Solv.Orange 2, Solv. Yellow 33, and Solv. Yellow 73 according to SDC. Such disperse dyes include Disperse Blue 1, Disperse Blue 3, Disperse Blue 14, Disperse Orange 1, Disperse Orange 3, Disperse Orange 11, Disperse Orange 13, Disperse Orange 25, Disperse Red 1, Disperse Red 13, Disperse Red 19, Disperse Yellow 3 and Disperse Yellow 9 according to SDC.

Since B-1 type dyes have excellent heat resistance, the hue of coolant hardly changes even at 100 °C. Therefore, even when a B-1 dye is used for a fuel cell stack at 90 to 100 °C, the identification capability of the coolant will not be lost.

B-2 type dyes are not ion-exchanged by an anion or cation exchanger and are capable of maintaining the low electrical conductivity of coolant. Such B-2 type dyes include Acid Blue 74 and Direct Green 8 which are excellent in the heat resistance. Such a dye is blended in the coolant composition in the range 0.00001 to 0.1% by weight, preferably 0.00001 to 0.01% by weight. When blended less than the aforementioned range, the coolant will lose its tint and self identification capability, and when blended more than the aforementioned range, the dye cannot maintain the low electrical conductivity.

It is desirable that a B-1 type dye is blended in the coolant composition in the range 0.00001 to 0.1% by weight. When blended less than 0.00001% by weight, the coolant will lose its tint and when the dye is blended more than 0.1% by weight, it is merely uneconomical.

Those dyes may be blended alone or in combination. For example, when dyes of three primary colors, red, blue and yellow, are to be blended, the coolant can be given practically any color, The coolant can then be given specific colors according to, e.g., specific formulations, manufacturing dates, users, etc.

In order to prevent metal corrosion in the cooling system of a fuel cell, the coolant composition of the present invention may additionally contain a conventional rust-preventing additive such as molybdate, tungustate, sulfate, nitrate or benzoate in an amount which will maintain the low electrical conductivity of coolant and does not deteriorate the electric power generation of the fuel cell.

The coolant composition of the present invention may further contain an anti-foam agent such as silicone or polyglycol in an amount which maintains the low electrical conductivity of coolant.

### Embodiments

The coolant composition of the present invention is explained in more detail hereinafter by way of embodiments. Table 1 shows preferred embodiments 1 to 4 and conventional comparisons 1 and 2.

**Table 1**

| Embodiments & Comparisons | | | | | | |
|---|---|---|---|---|---|---|
| Item | Embodiment 1 | Embodiment 2 | Embodiment 3 | Eembodiment 4 | Comparison 1 | Comparison 2 |
| Ethylene glycol | 50 | 50 | 50 | 50 | 50 | 50 |
| Deionized water | Remainder | Remainder | Remainder | Remainder | Remainder | Remainder |
| Solvent Blue 63 | 0.001 | 0.01 | - | - | - | - |
| Acid Blue 74 | - | - | 0.001 | 0.01 | - | - |
| Acid Red 52 | - | - | - | - | 0.01 | - |
| Total | 100 | 100 | 100 | 100 | 100 | 100 |
| (wt.%) | | | | | | |

Solvent Blue 63 is a dye having neither an acidic group nor a basic group, having a polar group. Acid Blue 74 is a dye having an acidic group. Acid Red 52 is a dye having both an acidic group and a basic group.

Tests on electrical conductivities and freezing points were carried out. The results are shown in Table 2. In addition, changes in hue caused by an ion-exchange resin were visually observed. Regarding embodiments 1 to 4 and comparison 1, changes in hue after maintaining them at the temperature 100 °C for 168 hours were visually observed and also by changes in absorbance for assessment of their heat resistance (initial absorbance=100).

**Table 2**

| Item | Embodiment 1 | Embodiment 2 | Embodiment 3 | Embodiment 4 | Comparison 1 | Comparison 2 |
|---|---|---|---|---|---|---|
| Electrical conductivity µS/cm | 03 | 04 | 09 | 7 | 15 | 0.3 |
| Freezing point °C | -41 | -41 | -41 | -41 | -41 | -41 |
| Hue before passing through ion exchange resin | Blue transparent | Blue transparent | Blue transparent | Blue transparent | Red transparent transparent | Colorless transparent |
| Hue after passing through anion exchange resin | Blue transparent | Blue transparent | Colorless transparent | Colorless transparent | Colorless transparent | Colorless transparent |
| Hue after passing through cation exchange resin | Colorless transparent | Colorless transparent | Blue transparent | Blue transparent | Colorless transparent | Colorless transparent |
| Hue after 168 hours at 100°C | Blue transparent | Blue transparent | Blue transparent | Blue transparent | Red transparent | |
| Absorbance after 168 hours at 100 °C (initial 100) | 60 | 70 | 65 | 70 | 60 | - |

It was confirmed that low electrical conductivity 0.3 to 7 µS/cm was maintained in all embodiments 1 to 4, while the electrical conductivity was remarkably high in comparison 1.

In addition, it was confirmed that the freezing points of embodiments 1-4 and comparisons 1 and 2 were all below zero, indicating that they are all usable in the cold climate.

There were no changes in hue in embodiments 1 and 2 after their passing through the anion-exchange resin. Their hues changed from blue transparent to colorless transparent after their passing thought the cation-exchange resin. There were no changes in hue in embodiments 3 and 4 after their passing through the cation-exchange resin. Their hues changed from blue transparent to colorless transparent after their passing through the anion-exchange resin. Comparison 1 changed its hue from red transparent to colorless transparent after passing through the cation-exchange resin and also after passing through the anion-exchange resin.

From the foregoing, it was concluded that embodiments 1 and 2 do not change their hues when blended in coolant to be supplied in a cooling passage associated with an anion-exchange resin. Embodiments 3 and 4 do not change their hues when blended in coolant to be supplied in a cooling passage associated with a cation-exchange resin.

Embodiments 1 to 4 as well as comparisons 1 and 2 retained their heat resistance satisfactorily, all having absorbance over 50 after 168 hours at 100°C.

The scope of the present invention is not to be limited by the aforementioned embodiments, which is to be restricted only by the appended claims.

### Effect of the invention

The coolant composition of the present invention comprising a base material and a dye which maintains the electrical conductivity of coolant sufficiently low prevents loss of electrical energy and provides self identification by color.

In addition, the coolant composition of the present invention comprising a base material and a dye which can pass through a cation or anion exchanger without adverse effects provides sufficiently low electrical conductivity to prevent loss of electrical energy and self identification by color even when a cation or anion exchanger is provided where it is used.

## Claims

1. A coolant composition to be blended in coolant for cooling a fuel cell stack, comprising a base material and a dye which maintains the electrical conductivity of the coolant at 10 µS/cm or lower at 25°C.

2. A coolant composition to be blended in coolant for cooling a fuel cell stack, comprising a base material and a dye which passes through a cation or anion exchanger provided in the fuel cell stack.

3. The coolant composition according to claim 1 or 2, wherein the dye does not change or hardly changes the hue of the coolant at 100 °C.

4. The coolant composition according to any one of claims 1 to 3, wherein the dye is selected from the group consisting of azoic dyes, sulfuric dyes, vats, oil-soluble dyes, disperse dyes and combinations thereof, which do not have a sulfonic acid group or a carboxyl group.

5. The coolant composition according to claim 4, wherein the azoic dye is Azoic Blue 10 as defined by SDC.

6. The coolant composition according to claim 4, wherein the sulfuric dye is selected from the group consisting of Sulphur Blue 3, Sulphur Blue 6, Sulphur Blue 7, Sulphur Blue 9, Sulphur Blue 13, Sulphur Green 1, Sulphur Red 2, Sulphur Red 3, Sulphur Red 5 and Sulphur Red 7 as defined by SDC.

7. The coolant composition according to claim 4, wherein the vat is selected from the group consisting of Vat Blue 1, Vat Blue 3, Vat Blue 4, Vat Blue 5, Vat Blue 6, Vat Blue 12, Vat Blue 13, Vat Blue 14, Vat Blue 18, Vat Blue 19, Vat Blue 20, Vat Blue 35, Vat Blue 41, Vat Green 1 and Vat Red 1 as defined by SDC.

8. The coolant composition according to claim 4, wherein the oil-soluble dye is selected from the group consisting of Solv. Blue 36, Solv. Blue 63, Solv. Green 3, Solv. Red 23, Solv. Red 43, Solv. Red 48, Solv. Red 72, Solv. Orange 2, Solv. Yellow 33 and Solv. Yellow 73 as defined by SDC.

9. The coolant composition according to claim 4, wherein the disperse dye is selected from the group consisting of Disperse Blue 1, Disperse Blue 3, Disperse Blue 14, Disperse Orange 1, Disperse Orange 3, Disperse Orange 11, Disperse Orange 13, Disperse Orange 25, Disperse Red 1, Disperse Red 13, Disperse Red 19, Disperse Yellow 3, and Disperse Yellow 9 as defined by SDC.

10. The coolant composition according to any one of claims 1 to 9, wherein the dye is contained 0.00001 to 0.1 % by weight.

11. The coolant composition according to any one of claims 1 to 10, wherein the base material is selected from the group consisting of water, glycols, alcohols, glycol ethers and mixtures thereof.

12. The coolant composition according to any one of claims 1 to 11, further comprising an anti-rust additive and an anti-foam agent.
